# EUROPEAN PATENT SPECIFICATION

(11) **EP 2 295 937 B1**
(45) Date of publication and mention of the grant of the patent: **29.04.2015**
(21) Application number: 09170239.9
(22) Date of filing: 14.09.2009
(51) Int. Cl.: G01C 22/00, G01C 21/20, A63B 24/00

(54) **Methods, device and systems for determining route metrics using stored route information**
Verfahren, Vorrichtung und Systeme zur Bestimmung der Routenkriterien mithilfe gespeicherter Routeninformationen
Procédés, dispositif et systèmes pour déterminer les mesures de route en utilisant des informations de route stockées

(43) Date of publication of application: 16.03.2011
(73) Proprietor: BlackBerry Limited, Waterloo, ON N2K 0A7 (CA)
(72) Inventor: Klassen, Gerhard Dietrich, Waterloo Ontario N2L 5Z5 (CA); Vander Veen, Raymond Paul, Waterloo Ontario N2L 5Z5 (CA); Scott, Sherryl Lee Lorraine, Waterloo Ontario N2L 3W8 (CA); Yach, David Paul, Waterloo Ontario N2L 3W8 (CA)
(74) Representative: MERH-IP Matias Erny Reichl Hoffmann

(56) References cited:
- EP-A2- 2 172 249
- WO-A1-02/055960
- WO-A1-2008/105651
- GB-A- 2 440 975
- JP-A- 11 166 988
- US-A- 6 013 007
- US-A1- 2005 250 458
- US-A1- 2007 287 596
- US-A1- 2008 109 158
- US-B1- 6 463 385
- US-B1- 6 837 827

## Description

### TECHNICAL FIELD

The present disclosure relates generally to mobile devices and, in particular, to techniques for determining various route metrics associated with a route traversed by the mobile device.

### BACKGROUND

Mobile devices have been developed which have the capability to identify their own location. These devices may exemplarily use GPS or other technologies. Mobile devices are particularly suited to applications facilitating navigation or location-based applications or services, on account of their portability. Mobile devices may be wireless communication devices such as cellular telephones, handheld PDAs, and the like, which are now capable of supporting features beyond voice or text-based communication between users, such as multimedia features.

Various forms of location-based services are known in the art. At least some of these services are configured relative to a check point, fixed either by a physical limitation or otherwise.

Various conventional approaches have proposed the storage of information regarding the route traversed by the mobile device. However, the approaches for determining useful parameters from such stored information have been limited.

For example, United States Patent Application Publication No. 2008/0109158 discloses a real time performance comparison that involves identifying predefined route data corresponding to a route. Measured locations are detected while a user traverses the route carrying a mobile device. The measured locations are sent via a network synchronously with the detection of the respective measured locations. Comparative data points are derived based on the predefined route data and the measured locations in response to receiving the measured locations. The comparative data points are sent, via the network, in response to measured locations. The comparative data points allow the user to measure relative performance during the route traversal.

Furthermore, United States Patent Application Publication No. 2007/0287596 discloses an athletic performance monitoring systems and methods, many of which utilize, in some manner, global positioning satellite ("GPS") data, that provide data and information to athletes and/or to equipment used by athletes during an athletic event. Such systems and methods may provide route information to athletes and/or their trainers, e.g., for pre-event planning, goal setting, and calibration purposes. Such systems and methods optionally may provide real time information to the athlete while the event takes place, e.g., to assist in reaching the pre-set goals. Additionally, data and information collected by such systems and methods may assist in post-event analysis for athletes and their trainers, e.g., to evaluate past performances and to assist in improving future performances.

Furthermore, United States Patent Application Publication No. 2005/0250458 discloses a user interface through which a training plan is established. The training plan includes a plurality of workouts each describing a human physical activity. The training plan is stored within data storage for selection by any of a plurality of users. In response to a user among said plurality of users selecting said training plan, data describing at least one workout in said training plan is electronically transmitted to a client device associated with the user.

### SUMMARY

Accordingly, an aspect of the present technology is a method of determining one or more route metrics according to claim 1.

Another aspect of the present technology is a computer program product configured ,to determine one or more route metrics according to claim 9.

Yet another aspect of the present technology is a mobile device according to claim 12.

### BRIEF DESCRIPTION OF THE DRAWINGS

Further features and advantages of the present technology will become apparent from the following detailed description, taken in combination with the appended drawings, in which:
FIG. 1 illustrates an exemplary timing sequence diagram for the method of the disclosure for determining one or more route metrics.
FIG. 2 illustrates an exemplary scenario of the application of the method of the disclosure for determining a lap time (an exemplary route timing metric).
FIG. 3 illustrates an exemplary flow chart presenting the method for determination of lap time.
FIG. 4 and FIG. 5 illustrate exemplary scenarios, wherein the method of the disclosure may be applied for determining a split time (an exemplary route timing metric).
FIG. 6 illustrates an exemplary method of the disclosure for arbitrarily defining a reference point.
FIG. 7 and FIG.8 illustrate exemplary scenarios of the application of the method of the disclosure for determination of custom routes.
FIG. 9 is a schematic of an exemplary network configured for developing custom routes based on specified parameters.
FIG. 10 is an illustration of a user interface of the mobile device displaying gaps in the a route record.

It will be noted that throughout the appended drawings, like features are identified by like reference numerals.

### DETAILED DESCRIPTION

The present technology addresses a problem identified by the applicant pertaining to the use of information stored regarding the routes traversed by a mobile device. In particular, the applicant has recognized that there has not been, to date, a satisfactory method, apparatus or computer program product for readily determining useful parameters from stored information regarding the routes traversed.

The present technology addresses the foregoing technical problems by providing a method, a computer program product, a mobile device or a system allowing for determining various route metrics associated with a route traversed by the mobile device. Exemplary route metrics include route timing metrics such as lap times, and route record metrics.

Accordingly, an aspect of the present technology is a method according to claim 1.

Another aspect of the present technology is a computer program product according to claim 9.

Yet another aspect of the present technology is a mobile device according to claim 12.

The disclosure is directed to a method, computer program product, mobile device or a system allowing for determining various route metrics based on route records associated with routes traversed by the mobile device. The determination of a route metric may utilize processing of a single route record or multiple route records. Exemplary route metrics include route timing metrics such as lap times, and route record metrics. Configurations of computer program products, mobile devices and systems for enabling the determination of various route metrics are also described.

### Route Records & Determination of Route Metrics

The method of the present disclosure may be configured to obtain and store in real-time one or more route records associated with routes traversed by the mobile device after the actuation of a reference stimulus. The route record comprises a plurality of sample sets, each sample set comprising simultaneous time and location data of the mobile device. A worker skilled in the art would readily appreciate that at least in some embodiments, the location data may be represented by a vector.

Route records such as described above may be used for various applications. For example, route records for two different routes may at least partially be compared to verify if the routes are substantially the same.

Route metrics are at least partially determined by processing previously stored sample sets, either of the same route record or different route records. The determination of a route metric may thus utilize processing of a single route record or multiple route records.

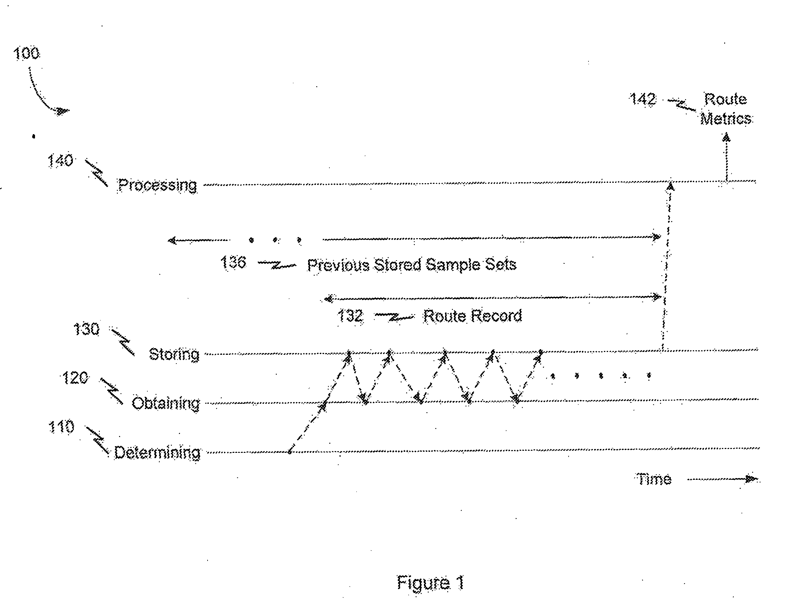

Referring to FIG. 1, the method **100** of determining one or more route metrics **142** involves determining **110** if a reference stimulus is actuated, followed by obtaining **120** and storing **130** of sample sets to form a route record **132** for a route traversed by the mobile device after the actuation of the reference stimulus. At least a portion of the previously stored sample sets **136** are then processed **140** to determine the route metrics **142.** In embodiments, the sample sets used for processing **140** may be limited to the sample sets of the current route record **132** or may also use sample sets of additional route records that have been previously stored. Previously stored route records may not all belong to the same user or mobile device and as such may also include historical route records of other users or mobile devices.

The timing sequence diagram of FIG. 1 is illustrative only and is not intended to limit the scope of the disclosure. For example, a worker skilled in the art will appreciate that the obtaining and storing of the sample sets may not occur sequentially but may also happen in parallel especially if the obtaining and storing of the different types of data (e.g. location, time) that constitute the same sample set occur at different speeds. In embodiments, the storing of the time data may be under way while the corresponding location data is still being obtained.

Additionally, the processing **140** of the previously stored sample sets **136** need not only occur just after the obtaining **120** and storing **130** of the entire route record **132,** but may also occur in real-time. In embodiments, real-time processing capability of previously stored sample sets is used for determining and mapping instantaneous velocities or accelerations or both, along the route.

Acts associated with the method described herein can be implemented as coded instructions in a computer program product. In other words, the computer program product is a computer-readable medium upon which software code is recorded to execute the method when the software code is loaded into a memory and executed on an operatively associated microprocessor, exemplarily of the mobile device or a system.

In embodiments, acts associated with the method described herein can be implemented as coded instructions in plural computer program products, each of the computer program products being a computer-readable medium upon which software code is recorded to execute appropriate portions of the method when the software code is loaded into memory and executed on an operatively associated microprocessor.

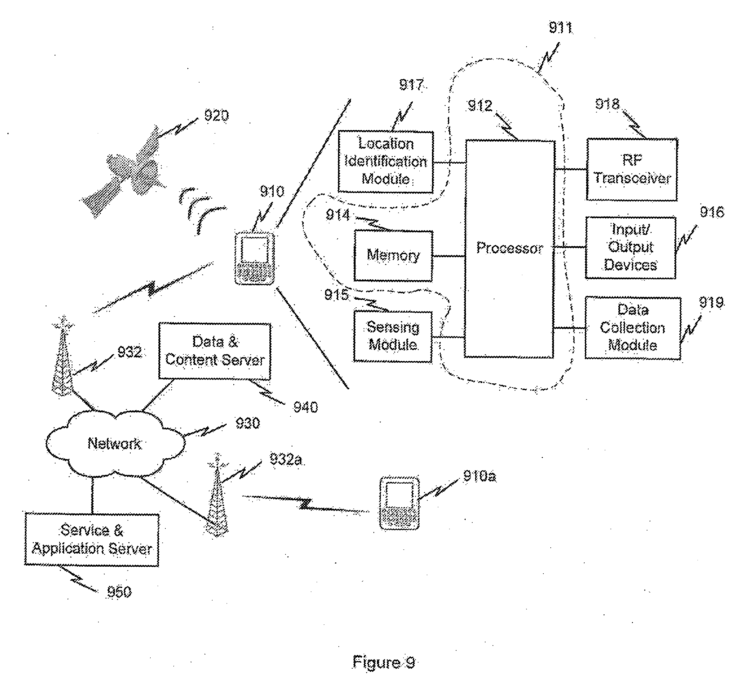

Exemplarily referring to FIG. 9, portions of the method may be performed using a first mobile device **910,** while portions of the method may be performed using a communicatively linked second mobile device **910a,** one or more servers **940, 950,** or the like. The communication network **930** facilitates the sharing of information (e.g. location or time data) and any required signalling needed for coordinating the execution of the entire method.

### Route Timing Metrics

In embodiments, the method of the present disclosure may be used to determine one or more route timing metrics. In embodiments, location data of previously stored sample sets are compared to determine one or more matched sample sets, based on a match criterion. The time data of the matched sample sets is at least partially used to determine the route timing metrics.

In embodiments, the actuation of a lap reference stimulus is used to define a lap reference sample set and thus a lap reference point. A sample set is determined as a matched sample set if a comparison of its location data satisfies a match criterion with the location data of the lap reference sample set. Lap times for a route can be determined by using the time data of the matched sample sets and the lap reference sample set.

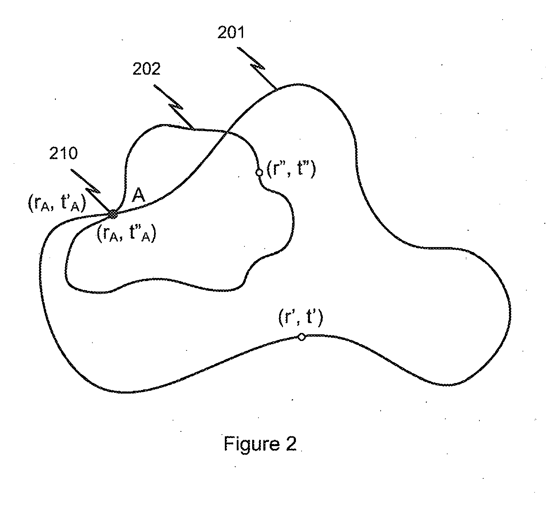

Referring to FIG. 2, a lap time for a first lap **201** may be calculated with respect to a lap reference point **A 210** based on the matched sample set **(r'~r_{A},t')** and **(r_{A},t'_{A})** where ~ indicates that the match criterion is satisfied. A lap time for a second lap **202** may be calculated based on the matched sample set **(r"~r_{A},t")** and **(r_{A},t"_{A}).** Lap times for different laps may be compared for determining which lap was quicker. The location data of the route records of different laps may also be compared to determine if the laps were substantially the same.

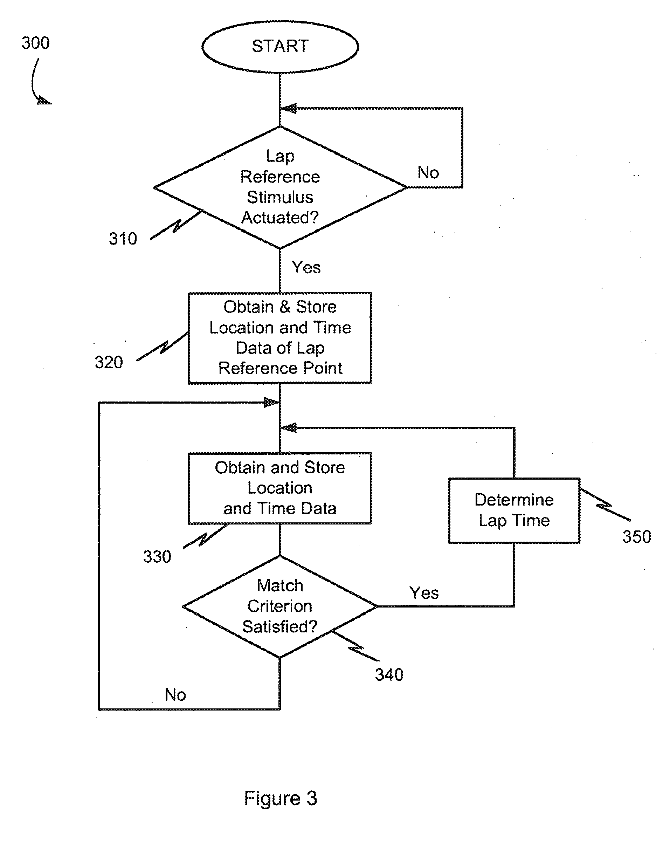

FIG. 3 illustrates an exemplary real-time implementation of the method of the disclosure for definition of a lap reference point, and calculation of lap times. The method **300** comprises: determining **310** whether a lap reference stimulus has been actuated; obtaining and storing **320** location and time data of the lap reference point defined by the actuation of the lap reference stimulus; obtaining and storing **330** in real-time time and location data of the mobile device traversing a lap, to form a lap record; comparing **340** location data for a match as specified by a match criterion, and determining **350** lap time if the match criterion has been satisfied.

In one embodiment, computation of path length may be used to determine lap distance, or combined with lap time information to provide average speed during a lap. In some embodiments, a path length may be computed or approximated to facilitate providing data such as distance travelled along a path, proportion of total distance travelled, average speed or velocity, or the like. Computation of path lengths may be performed by application of methods as would be readily understood by a worker skilled in the art, such as curve rectification methods, approximation by straight line segments, numerical integration, or the like.

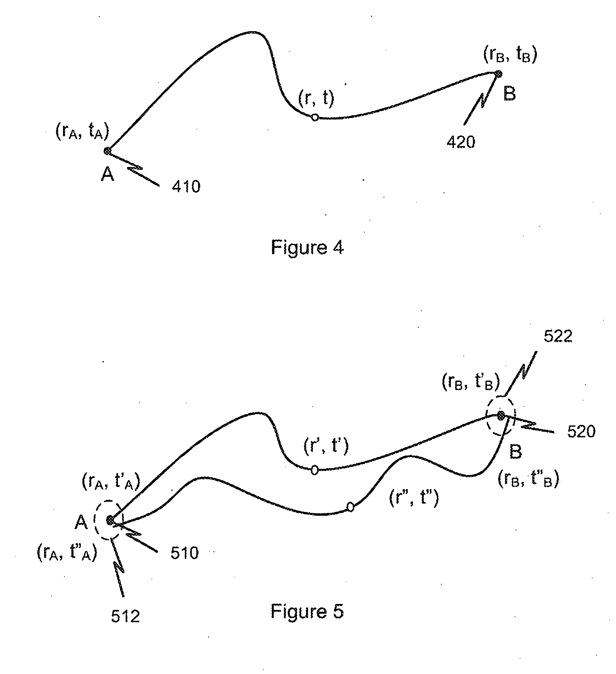

In embodiments, a split time representing the time for traversing a route between a start reference point and a stop reference point, can be determined. Referring to the scenario of FIG. 4, reference points **A 410** and **B 420,** arbitrarily defined apriori or at least partly in real time, may be considered as start reference point and stop reference point respectively. A split time for a user travelling from start reference point **A 410** and stopping at stop reference point **B 420** is calculated as follows: The time and location data of the mobile device at the start reference point is obtained and stored to define a start reference sample set **(r_{A},t_{A}).** A plurality of sample sets **(r,t)** of simultaneous time and location data are obtained and stored following the start reference stimulus, to form a route record. The plurality of sample sets generally represents time and location data obtained, exemplarily in real time at a predetermined fixed or variable sampling rate. The location data **r** of each sample set **(r,t)** is compared with the location data **r_{B}** of the stop reference point **B 420** to determine if there is a match, as specified by a predetermined or chosen match criterion. For all matched sample sets **(r~r_{B},t),** the split times are determined based on the time data of the matched sample sets and the start reference sample set.

Referring to FIG. 5, split times for different routes between a reference point **A 510** (defined in a first scenario as a start reference point for a route), and a reference point **B 520** (defined in this scenario as a stop reference point for a route) can be compared. The first split time is determined based on the time data of matched sample set **(r'~r_{B},t')** and the start reference sample set **(r_{A},t'_{A}),** while the second split time is determined based on the time data of matched sample set **(r"~r_{B},t")** and the start reference sample set **(r_{A},t"_{A}).**

Methods of the present disclosure may also be configured for the measurement of bi-directional split times. In this scenario, the first split time refers to the time taken for the travel from a reference point **X** to a reference point **Y,** while the second split time refers to the time taken for the travel from reference point **Y** to the reference point **X.**

Comparison of split times for substantially differing routes may be utilized for determining, for example, a faster route between two reference points. In embodiments, the methods of the disclosure may be configured to define a split time if the route traversed by the mobile device is substantially similar to a route that is pre-determined or specified or previously traversed.

The match criterion may be pre-determined or chosen. In embodiments, methods of the present disclosure may be configured to consider a sample set **(r',t'), (r",t")** as a matched sample set, if its location data **r',r"** is within a chosen or predetermined range of the location data **r_{B}** or **r_{A}** of the reference points **B 520** or **A 510,** respectively. This is indicated in FIG. 5, by the dotted ellipses **512, 522** around reference points **A 510** and **B 520,** the sizes of which can be optionally modified depending on the preference of the user or the resolution of the technology utilized by the means for determining the location, and may be different for the start and stop reference points.

Methods of the present disclosure may also utilize alternative match criteria. In embodiments, the match criterion may be defined such that the criterion is satisfied at a specific location if there is substantial orthogonality between the following two vectors: the instantaneous velocity vector of the mobile device at the specific location; and the vector difference between the location vectors defining the specific location and the stop reference point. For embodiments using this match criterion, the split time may not be determined based on the time data of the first instance of the mobile device being in the proximity of the stop reference point.

Exemplarily, a plurality of sample sets may be processed to determine an estimated time of arrival for a destination point.

### Route Record Metrics

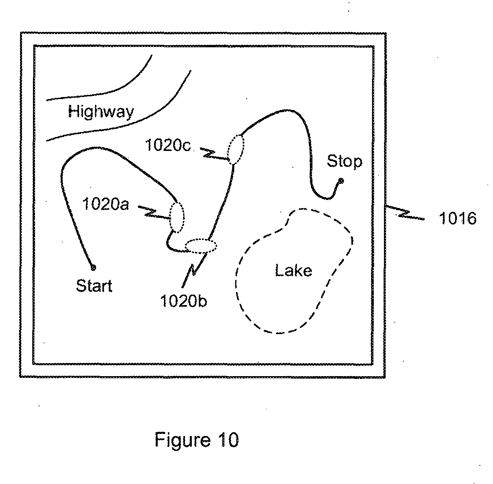

"Gaps" in a route record can be created when at least a portion (e.g. time data, location data) of the corresponding sample sets does not meet an accuracy criterion, for example, is lacking in accuracy or resolution, or is altogether missing. Exemplarily, for a mobile device utilizing GPS-based technology, location data may be missing when there is signal loss between the mobile device and the GPS-satellite system. The accuracy criterion may be predetermined or selected by a user. As exemplarily shown in FIG. 10, the user interface **1016** of the mobile device may be configured to display the route and to indicate such gaps **1020a, 1020b, 1020c** therein.

The route record may be enhanced by determination of sample sets corresponding to the gaps in the route record by interpolation or extrapolation of previously stored sample sets that have satisfactory accuracy. A worker skilled in the art would be familiar with appropriate interpolation and extrapolation techniques. The sample sets corresponding to the gaps in the route record may therefore be considered as route record metrics.

Appropriate interpolation and extrapolation techniques may exemplarily include but are not limited to the following: a straight-line interpolation technique; techniques utilizing geographical information (e.g. map data) for interpolation; techniques utilizing historical route records; or a combination of the above techniques.

In embodiments, the inserted route record metrics for the gaps in the route record may also utilize sample sets of previous instances of travel on the same or sufficiently similar route. Exemplarily, the historical route records of the mobile device's user may be used for updates. Historical route records of other users may also be used to determine the route record metrics that is to be inserted. For example, records of a previous group of athletes may be used. For example, curve-fitting methods such as the method of least squares may utilize such information to insert route data, as would be readily understood by a worker skilled in the art.

In embodiments, the geographical terrain information can be utilized to identify or sort one or more options that account for the gaps in the route record. For example, an option that involves a fifteen-foot drop may be set as the least likely option if the user of the mobile device was known to be travelling on foot. Cliffs or walls may be used to define constraints or boundaries on the set of possible routes s when inserting route data. Maximum or minimum instantaneous or average speeds may also be used to define constraints on the set of possible routes when inserting route data.

In embodiments, map data may be used for interpolation and extrapolation. Such map data may include information about known streets or trails in the region. Known streets or trails may be placed as a more likely route in a sorted list of possible routes.

In embodiments, the user of the mobile device may be allowed to validate the sample sets inserted for the gaps in the route record. The user may also be given the option to add additional information to complete the route record. For example, a user may choose to start running even before his/her mobile device has acquired a GPS signal. While the route record will only contain information after the mobile device has established an operative association with the GPS-satellites, the user may be given the option to add the information for the initial part of the route. In embodiments, at least a portion of the sample sets or reference sample set may thus be obtained from a user interface of the mobile device.

In embodiments, the mobile device may prompt the user to at least partially validate the route record if a possible measurement error has occurred. For example, if the user has crossed a wall or cliff boundary, or if the user has exceeded a predetermined maximum instantaneous or average speed, the mobile device may prompt the user to validate the route record. The mobile device may additionally compute and propose a set of likely alternative route records in such cases.

Referring to FIG. 9 and in accordance with some embodiments, the mobile device also comprises a data collection module **919,** which may be configured for collection of other forms of data (e.g. audio, video, images, text for example short messages from the user, monitoring data for example heart rate measurements, etc), which may be associated with one or more of the sample sets of the route record. In embodiments, the mobile device further comprises a camera, and as such a jogger may take photographs at various locations along the route and associate each photograph with a corresponding sample set which may enhance the route record. In this embodiment, the one or more data files representative of an event (e.g. a running event) can be created that include various additional forms of data (e.g. photos, audio, video etc). Such data may exemplarily allow a user to indicate the mode of transport (e.g. walk, drive) used at various stretches of the route.

### Reference Stimulus

The reference stimulus is a signal, trigger, or other stimulus used to enable the definition of a reference point exemplarily by the collection of data (e.g. location data, time data or both). The reference stimulus can be one or more signals of a variety of different types (e.g. an electronic signal, an audio signal, etc.).

A plurality of reference points can be arbitrarily defined by the actuation of corresponding reference stimuli. Each reference point can be associated with a corresponding reference sample set comprising the location data and the time data of the mobile device at the actuation of the reference stimulus.

For example, arbitrarily defining one or more reference points may refer to a feature or capability for selecting substantially any reference point from a predetermined group of reference points, for example substantially any geographic coordinate in a predetermined geographic area. The reference point may be defined via an internal or external source such as a user, computer program, communicatively coupled device, or a combination thereof, for example. In embodiments, the reference points are not pre-programmed or pre-set but can be defined arbitrarily and optionally in real time.

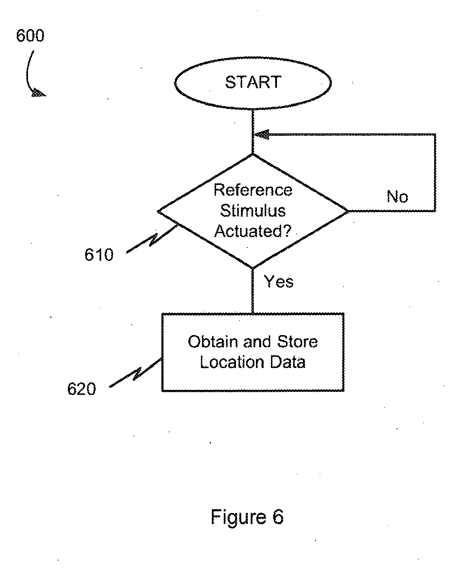

FIG. 6 illustrates an exemplary method **600** for arbitrarily defining one or more reference points for a mobile device. The method **600** comprises: determining **610** whether a reference stimulus has been actuated; and obtaining and storing **620** location data of the mobile device substantially at the actuation of the reference stimulus to define a reference point.

In embodiments, the mobile device is configured to define two reference points to serve as a start reference point and a stop reference point. The location and time data of the mobile device at the actuation of a start reference stimulus and a stop reference stimulus are used to create a start reference sample set and a stop reference sample set respectively. In embodiments, the mobile device defines a single lap reference point, at the actuation of a lap reference stimulus. The location and time data of the mobile device at the actuation of the lap reference stimulus is used to create a lap reference sample set.

As noted earlier, the reference stimulus can be one or more signals of a variety of different types (e.g. an electronic signal, an audio signal, etc.). In embodiments, the reference stimulus is an audio signal of a predetermined or chosen frequency or decibel range. Appropriate sensing means may exemplarily use a microphone, and associated electronic circuitry appropriately designed to determine if a received audio signal satisfies the predetermined or chosen frequency or decibel range.

In embodiments, the reference stimulus is an electronic digital signal (e.g. a pre-determined or chosen reference bit sequence). The sensing module may comprise a receiver and logic module configured to compare a received bit sequence for a match with the pre-determined or chosen reference bit sequence. The reference stimulus is determined to be actuated if the comparison reveals a substantial match.

In examples not part of the invention, the reference stimulus may be triggered or detected by the actuation of a reference stimulus option by the user of the mobile device. The reference stimulus option may be implemented in either software or hardware. Exemplarily, the reference stimulus may be triggered by actuating an icon displayed on an output user interface, for example using a mouse or a touch screen; or by an actuation of a hardware element such as a button, a combination of keys on a keypad etc. In embodiments, a button is actuated to trigger the reference stimulus and thereby the definition of the reference point.

Alternately, the reference stimulus may be provided by a reference signal sent from a communicatively linked server, or from another mobile device. As the reference points are defined only by the corresponding reference stimuli, they can be arbitrarily chosen from a plurality of possible locations, exemplarily within a predetermined set of locations such as Earth, North America, etc.

According to the invention, to define a start reference point as a reference point based on the actuation of a start reference stimulus, the start reference stimulus is triggered either by the last actuation of a start reference stimulus option at a plurality of communicatively linked mobile devices. Exemplarily, each mobile device may be associated with a participant of a race. In this context, all race participants thus start the race when the last participant is ready. In other examples, a plurality of mobile devices define their reference points at the actuation of a common reference stimulus from a communicatively linked server, exemplarily actuated by a coach for training of multiple athletes. The reference points for the various athletes may all be distinct, and may be spaced apart by large distances (e.g. in different cities).

The reference points may be defined arbitrarily apriori or at least partly in real-time. In embodiments, the reference points are defined, and stored for use when traversing routes at a later time (e.g. a day later). In embodiments, the reference points are defined in real-time; e.g. at substantially the first instant of starting the route. A reference point may be selected from a predetermined group of points, which may be limited by a predetermined resolution.

### Data Collection & Communication

In embodiments, the mobile device allows for transfer of data with other mobile devices or one or more servers communicatively linked with said mobile device. Exemplarily, this data may include the reference stimulus.

In embodiments, the mobile device is a wireless communications device capable of transmitting or receiving information, or both, via a wireless communication medium such as radio, infrared, or the like. The communication capabilities of wireless communications device may include voice communication capabilities, data communication capabilities, or a combination thereof. The term "wireless communications device", for the purposes of this specification, shall include any wireless handheld, smart phone, PDA, tablet, laptop, notebook, netbook, or other communications device that is capable of transmission and reception of data via a wireless communication medium such as radio, infrared or the like.

As discussed earlier, the mobile device may be configured for collection of other forms of additional data (e.g. audio, video, images, short messages from the user etc), which may be associated with or included as part of one or more of the sample sets. The additional data associated with the one or more sample sets may be stored either on the mobile device, or transferred to a server for optionally enabling "play-back" of the event, or transferred to other mobile devices communicatively linked therewith. In embodiments, at least part of the data transfer occurs in real-time.

Exemplarily, the transfer of data allows for simulation of competitive races between users of different mobile devices, even if the users are separated geographically. In an embodiment, audio signals associated with different sample sets may be transferred in real-time fashion to update other race participants that are using the communicatively linked mobile devices, while video signals associated with different sample sets may be transferred to a central server for later playback. In embodiments, both audio and video signals can be transferred to one or more other mobile devices in real time.

A worker skilled in the art would appreciate that the forms of data that may be transferred in real-time may depend on the bandwidth capabilities of the communication network infrastructure providing the data transmission capability. Audio signals may be transferred either in circuit-switched or packet-switched fashion.

In embodiments, part of the data that is transferred is at least partially derived from the sample sets. Exemplarily, an estimated time of arrival at a destination may be determined by processing a plurality of sample sets, and the estimated time of arrival sent to users of other mobile devices, or a central server.

In some embodiments, the data transferred between mobile devices takes the form of one or more short data messages, such as friendly taunts between various race participants. Alternately, the friendly taunts between the competitors may be audio signals. In one embodiment, the communication network may be used by a coach or a race director to transmit a message to training athletes or race participants respectively. The communication signals may be broadcast or multicast (for example, a team leader sending signals to the rest of the team, namely the other mobile devices). Appropriate communication protocols and network architectures that support various types of communication would be readily known to a worker skilled in the art.

In embodiments, the functionality of data transfer is integrated with the one or more computer program products configured to achieve the remaining functionalities of the mobile device (e.g. lap time determination), thus obviating the need for a user to access a separate software module (e.g. email) for data transfer.

As another example, the transfer of data allows for simulation of competitive races between users of different mobile devices, even if they are separated in time. For example, a mobile device may obtain route records indicative of one or more other users' previous performances, or of the same user's performance on a previous occasion. The user may then race against one or more previous users, and optionally record and provide individual or aggregate event information for subsequent usage. Such activity may be regarded for example as a form of interactive time trial. For example, event information may be recorded at a geo-caching site, and retrieved by subsequent devices visiting the site, thereby enabling a combined geo-caching and virtual racing activity.

### Custom Route Determination

In embodiments, the mobile device and method of the disclosure may be configured to identify or obtain a custom route for a user that satisfies various parameters.

The processing required for the identification or determination of the custom route may be performed by the mobile device of the user, by a server operated exemplarily by a service and application provider, or by a combination of both. The exact distribution of the processing burden may at least partly depend on the computational capabilities of the different processing entities, and of the communication capabilities between the different entities. One or more load balancing activities may be performed for distribution of processing burden, as would be readily understood by a worker skilled in the art.

Exemplarily, the processing burden for the determination of the custom route may be shifted between the mobile device and a server, based on the time-variant data rates that may be available at the communication link there-between. In embodiments, if the communication link between the mobile device and the server is slow or substantially non-existent, the mobile device may default to determining the custom route itself. If the communication link between the mobile device and the server provides sufficiently high data rates, the computation may be shifted to the server. In these embodiments, the mobile device may be configured, at the time of request for a custom route, to probe the associated communication network to determine potentially available data rates.

Information required for the processing may at least partly be stored on the mobile device of the user, on the server of the service and application provider, or on a server of a data and content provider communicatively linked with the appropriate processing entities. This information may include geographical information, historical route records of users of interest, tourist information, weather parameters etc.

In one embodiment, the method for identifying or determining the custom route comprises the following acts: obtaining location data of a reference point for the development of the custom route, the reference point being the location of a mobile device at the actuation of a reference stimulus; obtaining one or more parameters of a custom route, exemplarily from a user of the mobile device; obtaining information for a region proximal to or including the reference point; and identifying one or more routes, if any, within the region satisfying the parameters, utilizing at least partially the information for the region and the parameters, for selection of a custom route therefrom.

Referring to FIG. 9, the mobile device is a wireless communications device **910** operatively associated with a GPS system **920** allowing for determining its location. The mobile device **910** is linked to a cellular network **930** through a base-station **932,** and thereby to one or more servers **950** of a service and application provider, and to one or more servers **940** of a data and content provider. Additional mobile devices **910a** may be linked to the cellular network **930** using the same base station **932** or a separate base station **932a.** The cellular network **930** thus serves for data transfer between peer mobile devices **932, 932a.**

In embodiments, on request of a custom route and parameters of choice from a user of the mobile device **910,** the service and application provider obtains various types of information about a region from the data and content provider, and undertakes the processing required for determining if any routes within the region can satisfy the parameters of choice. The results of the processing can be sent back to the mobile device **910** through the cellular network **930** and its base-station **932.** A worker skilled in the art would readily appreciate that the same network configuration can be used for providing various other applications, and is not limited to the application of the custom route determination.

The reference point for the development of said custom route may be the location of the user at the actuation of a reference stimulus (i.e., the reference point).

At least some of the parameters for the custom route may be set by the user, or by one or more third parties communicatively linked with the user. Parameters may exemplarily include at least one of the following: start reference point for the custom route, total distance of custom route, total expected time for completion of custom route, terrain parameters such as inclination (e.g. hilly, flat etc.), nature of surface (e.g. paved surfaces, grassy areas etc.), mode of transport (e.g. walking, canoeing etc.), tourist or geographical parameters (e.g. local tourist landmarks, locations with "best views", parks etc). The user may specify desired maximum or minimum limits on quantitative parameters such as route distance, completion time, total vertical travel, or the like.

In embodiments, the user may specify that the custom route satisfy the following parameters, exemplarily based on the mode of transport: a first distance by foot, a second distance by cycling, and a third distance by swimming. Such embodiments may be utilized for designing custom triathlon-type routes in a region of interest relative to an arbitrarily defined reference point.

Exemplarily, the start reference point of a custom route for an athlete may be specified by his/her training coach (third party user). The start reference point may also be derived by a discussion between multiple third party users and the user. The start reference point for the custom route may coincide with the reference point used for the determination of the custom route, or be within a certain geographical distance of the same.

In embodiments, the mobile device may provide a form that allows the user to select one or more options (e.g. using a drop-down menu) for the various parameters for a custom route. The device may also request the user to set default states for at least a few of the parameters.

In embodiments, one or more custom route parameters may be associated with a degree of difficulty for the route. For example, the user may specify a degree of difficulty which represents a collection of parameters for determining the custom route. Alternatively, the degree of difficulty may be calculated based upon user-specified parameters. A degree of difficulty may be used for competitive race purposes, for example.

The identification of one or more custom routes may be first limited to a region of interest including the reference point. Various algorithms may be used for the identification of the custom routes, as would be readily known to a worker skilled in the art.

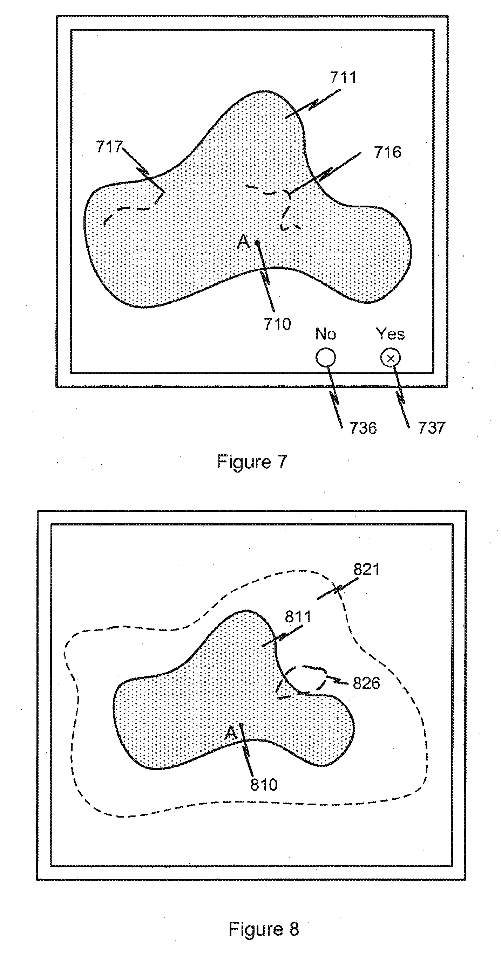

In one scenario, the processing for the custom routes may determine that multiple routes within the region of interest satisfy the parameters of choice. Referring to FIG. 7, the results of the processing for the custom route are displayed on a user interface of the mobile device for an exemplary scenario where the region of interest **711** including a reference point **A 710** has two routes **716, 717** that satisfy the parameters of choice.

Alternately, the processing for custom route determination may result in not finding any suitable custom routes within the region of interest, which sufficiently satisfy the selected parameters. In either case, the user may be provided with options to modify the parameters of the custom route. When multiple routes are found, the user may manually choose one as the custom route. Alternately, the multiple routes may be sorted or automatically selected based on the previously stored sample sets.

For the scenario when no routes that sufficiently satisfy the parameters are found in the region of interest, the user may be provided with the option of either manually choosing a second region of interest. Referring to FIG. 8, the results of the processing for the custom route are displayed on a user interface of the mobile device for an exemplary scenario wherein the processing within the first region of interest **811** including the reference point **A 810** did not provide any satisfactory results. However, processing within a second region of interest **821** results in determining a custom route **826** that satisfies the parameters of choice.

Alternately, the processors may be configured to automatically repeat the calculations for a second region of interest, which may or may not overlap with the first region of interest. The processing algorithms may be configured to minimize the processing when the first and second regions of interest at least partially overlap (for example, FIG. 8).

In embodiments, determining a custom route based on custom route parameters may comprise determining one or more routes which most closely satisfy the custom route parameters. For example, if one or more routes can be found which completely satisfy the parameters, at least one of these routes may be proposed to the user. However, if no route which completely satisfies the parameters can be found, one or more routes which closely satisfy the parameters may be provided to the user for selection.

### Mobile Device

The mobile device comprises a processing module, a location identification module and a sensing module. The sensing module is configured to determine whether a reference stimulus is actuated and comprises sensing means appropriate to the nature of the expected reference stimulus. The location identification module is configured to obtain location data of the mobile device and may utilize various technologies, as discussed below. The processing module is operatively associated with the sensing and location identification modules, and may be configured to coordinate their functions, and to process different types of data using one or more processors. In embodiments, the processing module may comprise or be operatively associated with a memory module configured for storage of different types of data. Appropriate processing modules would be readily known to a worker skilled in the art.

As discussed earlier, the reference stimulus may be one or more signals of a variety of types (e.g. audio, digital bit sequence etc). A worker skilled in the art would readily design a suitable sensing module with appropriate sensing means. As such, appropriate sensing means are not to be limited to any exemplary means mentioned herein. Exemplarily, the sensing means may be a microphone if the reference stimulus is an audio signal, or an electronic receiver if the reference stimulus is an electronic bit sequence.

In embodiments, GPS receivers may be used to determine the location of the mobile device(s). However, it should be appreciated that other techniques can be used to determine the current location to a degree of accuracy commensurate with the technique used. For example, cell tower triangulation or radiolocation techniques can be used to generate the current location for the device. Alternatively, the identity (and location) of the cell tower handling the mobile device's communications can be used as a proxy for the location of the mobile device. Another approach for location identification would be to prompt the user of the device to enter his or her current location (e.g. entering a street address, picking a point of interest (POI) from a map or selecting the current location using crosshairs on a map). As yet another example, Global Navigation Satellite Systems (GNSS) or pseudo-satellite systems other than or in addition to a GPS system may be used. For example, GLONASS, Beidou, COMPASS, Galileo, or like systems may be utilized for determining the location. Satellite-based, regional, or network-based augmentation or improvement systems such as WAAS and A-GPS may also be utilized to aid in determining the location of the mobile device.

In embodiments, the location identification module of the mobile device may be configured to trigger at the actuation of a reference stimulus, for determination of the location data at substantially the same instant. A worker skilled in the art would appreciate that the time lag between the actuation of the reference stimulus and the determination of the location data depends on the technology used for determining the location and determining the actuation of the reference stimulus. Appropriate technologies may be chosen to satisfy a predetermined or chosen range for this time lag.

FIG. 9 also shows a block diagram depicting certain main components of an exemplary mobile device **910** with wireless communications capability. It should be understood that this figure is intentionally simplified to show only certain components; the device **910** may include other components beyond those shown in FIG. 9. The device **910** comprises a processing module **911,** which includes a microprocessor **912** (or simply a "processor") and operatively associated memory **914** (in the form of RAM or flash memory or both), to enable a variety of device functions and to execute an operating system for running software applications loaded on the device. The device **910** includes a radiofrequency (RF) transceiver **918** for communicating wirelessly with the base station **932** of a wireless network **930.** The device **910** may additionally comprise a sensing module **915** configured to determine if a reference stimulus has been actuated.

The RF transceiver **918** may optionally be alternatively or additionally used for communicating directly with a peer device such as a third party wireless communication device, for example as may occur in some ad-hoc networks. The base station **932** may be a cellular base station, wireless access point, or the like. The base station **932** may vary as the wireless device travels, for example, using well-known handoff processes in cellular networks. The RF transceiver **918** enables access to a wireless communication channel for transmitting and receiving data. The RF transceiver **918** may further allow for a wireless voice channel for transmitting and receiving voice communications, for example concurrently with transmission and reception of data over the same or a separate logical or physical channel.

The mobile device **910** further comprises a location identification module **917,** which is configured to determine the location of the mobile device. The location identification module **917** is a GPS receiver chipset for receiving GPS radio signals transmitted from the one or more orbiting GPS satellites **920.** The GPS receiver chipset can be embedded within the device or externally connected, such as, for example, a Bluetooth^{™} GPS puck or dongle. Other systems for determining location may be used in place of GPS, as would be readily understood by a worker skilled in the art.

In terms of input/output devices or user interfaces (UI's) **916,** the device **910** may include one or more of the following: a display (e.g. a small LCD screen), a thumbwheel, a trackball, a keyboard, touch screen, a keypad, a button, a USB or serial port for connecting to peripheral equipment, a camera, a display, a speaker and a microphone. The display may optionally have touch-screen functionality.

The user interface may be configured to signal or alert the user of the mobile device that a portion of the sample sets or the route metrics or both do not meet a performance criterion. Such signals may either be visually displayed, or may be an audible signal or a tactile signal (e.g. vibration).

In embodiments, the user interface may be configured to signal to a user of the mobile device running a lap, how their current performance compares with historical performances. Exemplarily, the method of the disclosure may be configured to compare the location data of the current route at one or more specified points of time, with the location data of historical route records (of the same user or other users) at corresponding points of time. Alternatively, the time data of the current route at one or more specified locations may be compared with the time data of historical route records. The user interface may be configured to signal the user if their current performance lags their previous performances. In one embodiment, an audible signal may be configured to be at a high volume if the performance lag is significant and at a low volume if the lag is minimal.

Referring to FIG. 7, the user interface can show the custom routes **716, 717** and the region. The success of the processing required for the determination of the custom route can be indicated using indicator LEDS 'No' **736** and 'Yes' **737.** In one embodiment, a failure in determination of a custom route may also be indicated to the user by an audible signal.

The wireless communication device **910** sends and receives communication signals via the RF transceiver **918.** When communicating wirelessly with a base station **932** of a wireless network **930,** the device **910** may communicate in accordance with one or more appropriate technologies such as: Global Systems for Mobile communications (GSM), General Packet Radio Service (GPRS), Code Division Multiple Access (CDMA) technologies, Wideband CDMA (WCDMA), whether 2G, 3G, High speed packet access (HSPA), Universal Mobile Telecommunication System (UMTS) based technologies, Long Term Evolution (LTE) technologies, Orthogonal Frequency Division Multiplexing (OFDM) technologies, Ultra-Wideband (UWB) technologies, WiFi^{™} or WiMAX^{™} technologies, or other communication technologies and protocols as would readily be understood by a worker skilled in the art. In some embodiments, the wireless device **910** may be capable of operation using multiple protocols. The base station **932** may be part of a wireless network, such as a cellular network, local-area network, wide-area network, wireless hotspot network, or the like. The wireless device, base station, network components, and the like, may be configured for data communication, voice communication, or a combination thereof, possibly using additional components, configurations and procedures where appropriate, such as SIM cards, authorization and authentication procedures, handoff procedures, and the like, as would be readily understood by a worker skilled in the art.

This new technology has been described in terms of specific implementations and configurations (and variants thereof) which are intended to be exemplary only. The scope of the exclusive right sought by the applicant is therefore intended to be limited solely by the appended claims.

## Claims

1. A method (100) of determining one or more route metrics (142) for a mobile device configured to allow a determination of its location, the method (100) comprising the steps of:
determining (110) if a reference stimulus is actuated;
wherein said reference stimulus is triggered by the last actuation of a start reference stimulus option by a plurality of communicatively linked mobile devices;
obtaining (120) and storing (130) in real-time a route record (132) comprising a plurality of sample sets, said sample sets comprising simultaneous time and location data of said mobile device traversing a route after the actuation of the reference stimulus; and
processing (140) previously stored sample sets (136) to at least partially determine said one or more route metrics (142).

2. The method of claim 1, wherein said processing (140) is performed in real-time.

3. The method of claim 1, wherein previously stored sample sets include previously stored sample sets of different route records.

4. The method of claim 1, wherein said processing (140) includes comparing the location data of previously stored sample sets (136) to determine one or more matched sample sets, said comparing based on a match criterion, and determining one or more route timing metrics at least partially using the time data of said matched sample sets.

5. The method of claim 4, wherein a sample set is determined as a matched sample set if a comparison of its location data satisfies a match criterion with the location data of a lap reference sample set obtained at the actuation of a lap reference stimulus, and the time data of said matched sample set and lap reference sample set is used to determine a lap time.

6. The method of claim 1, wherein said processing (140) includes interpolating or extrapolating the location data of previously stored sample sets (136) to determine sample sets of said route record (132), wherein at least a part of said sample sets is inaccurate, based on an accuracy criterion.

7. The method of claim 1, wherein at least a portion of said route record is based on a user input.

8. The method of claim 1 further comprising:
obtaining one or more parameters of a custom route;
obtaining information for a region proximal to or including a reference point defined by the location data of said mobile device at the actuation of said reference stimulus; and
identifying if any, utilizing at least partially said information for the region and said parameters, one or more routes within said region satisfying said parameters, for selection of a custom route therefrom based on said processing of the previously stored sample sets.

9. A computer program product configured to determine one or more route metrics for a mobile device configured to allow a determination of its location, the computer program product comprising code which, when loaded into a memory and executed on an associated processor, is adapted to perform:
determining if a reference stimulus is actuated;
wherein said reference stimulus is triggered by the last actuation of a start reference stimulus option by a plurality of communicatively linked mobile devices;
obtaining and storing in real-time a route record comprising a plurality of sample sets, said ample sets comprising simultaneous time and location data of said mobile device traversing a route after the actuation of the reference stimulus; and
processing previously stored sample sets to at least partially determine said one or more route metrics.

10. The computer program product of claim 8, wherein said processing includes comparing the location data of previously stored sample sets to determine one or more matched sample sets, said comparing based on a match criterion, and determining one or more route timing metrics at least partially using the time data of said matched sample sets.

11. The computer program product of claim 9, wherein said processing includes interpolating or extrapolating the location data of previously stored sample sets to determine sample sets of said route record, wherein at least a part of said sample sets is inaccurate, based on an accuracy criterion.

12. A mobile device (910) configured to determine one or more route metrics, said mobile device comprising:
a sensing module (915) configured to determine whether a reference stimulus is actuated;
wherein said reference stimulus is triggered by the last actuation of a start reference stimulus option by a plurality of communicatively linked mobile devices, wherein the mobile device is configured to trigger the reference stimulus based at least in part on one or more signals received at said mobile device from a communicatively linked mobile device;
a location identification module (917) configured to obtain location data of said mobile device (910), after receiving a notification from the sensing module (915) that the reference stimulus is actuated; and
a processing module (911) operatively coupled to the sensing module (915) and the location identification module (917), said processing module (911) configured to obtain time data in a simultaneous fashion with the location identification module (917) obtaining the location data, said time and location data at least partially defining a sample set and a plurality of sample sets defining a route record, said processing module (917) further configured to process previously stored sample sets to at least partially determine said one or more route metrics.

13. The mobile device of claim 12, wherein the processing module is configured to compare the location data of previously stored sample sets to determine one or more matched sample sets, said comparing based on a match criterion, and to determine one or more route timing metrics at least partially using the time data of said matched sample sets.

14. The mobile device of claim 12, wherein the processing module is configured to interpolate or extrapolate the location data of previously stored sample sets to determine sample sets of said route record, wherein at least a part of said sample sets is inaccurate, based on an accuracy criterion.

15. The mobile device of claim 12, further comprising a user interface configured to signal a user of the mobile device if said previously stored sample sets or said route metrics at least partially do not meet a performance criterion.

## Patentansprüche

1. Verfahren (100) zum Bestimmen einer oder mehrerer Routenmetrik(en) (142) für eine mobile Vorrichtung, die konfiguriert ist, eine Bestimmung ihrer Position zuzulassen, wobei das Verfahren (100) die Schritte aufweist:
Bestimmen (110), ob ein Referenzstimulus ausgelöst wird;
wobei der Referenzstimulus durch die letzte Betätigung einer Start-Referenzstimulus-Option durch eine Vielzahl von kommunikativ verbundenen mobilen Vorrichtungen ausgelöst wird;
Erlangen (120) und Speichern (130) in Echtzeit eines Routendatensatzes (132), der eine Vielzahl von Abtastsätzen aufweist, wobei die Abtastsätze gleichzeitige Zeit- und Positionsdaten der mobilen Vorrichtung aufweisen, die einer Route folgt nach der Betätigung des Referenzstimulus; und
Verarbeiten (140) von zuvor gespeicherten Abtastsätzen (136), um zumindest teilweise die eine oder mehrere Routenmetrik(en) (142) zu bestimmen.

2. Das Verfahren gemäß Anspruch 1, wobei das Verarbeiten (140) in Echtzeit durchgeführt wird.

3. Das Verfahren gemäß Anspruch 1, wobei zuvor gespeicherte Abtastsätze zuvor gespeicherte Abtastsätze von verschiedenen Routendatensätzen umfassen.

4. Das Verfahren gemäß Anspruch 1, wobei das Verarbeiten (140) umfasst ein Vergleichen der Positionsdaten von zuvor gespeicherten Abtastsätzen (136), um einen oder mehrere übereinstimmende Abtastsätze zu bestimmen, wobei das Vergleichen auf einem Übereinstimmungskriterium basiert, und ein Bestimmen einer oder mehrerer Route-Timing-Metrik(en) zumindest teilweise unter Verwendung der Zeitdaten der übereinstimmenden Abtastsätze.

5. Das Verfahren gemäß Anspruch 4, wobei ein Abtastsatz als ein übereinstimmender Abtastsatz bestimmt wird, wenn ein Vergleich seiner Positionsdaten ein Übereinstimmungskriterium mit den Positionsdaten eines Runde-Referenz-Abtastsatzes erfüllt, der bei der Betätigung eines Runde-Referenzstimulus erlangt wird, und die Zeitdaten des übereinstimmenden Abtastsatzes und des Runde-Referenz-Abtastsatzes verwendet werden zum Bestimmen einer Rundenzeit.

6. Das Verfahren gemäß Anspruch 1, wobei das Verarbeiten (140) ein Interpolieren oder Extrapolieren der Positionsdaten von zuvor gespeicherten Abtastsätzen (136) zum Bestimmen von Abtastsätzen des Routendatensatzes (132) umfasst, wobei zumindest ein Teil der Abtastsätze ungenau ist, basierend auf einem Genauigkeitskriterium.

7. Das Verfahren gemäß Anspruch 1, wobei zumindest ein Teil des Routendatensatzes auf einer Benutzereingabe basiert.

8. Das Verfahren gemäß Anspruch 1, das weiter aufweist:
Erlangen eines oder mehrerer Parameter(s) einer benutzerdefinierten Route;
Erlangen von Information für einen Bereich proximal zu einem Referenzpunkt oder diesen umfassend, der durch die Positionsdaten der mobilen Vorrichtung bei der Betätigung des Referenzstimulus definiert wird; und
Identifizieren, wenn vorhanden, unter Verwendung zumindest teilweise der Information für den Bereich und der Parameter, einer oder mehrerer Route(n) in dem Bereich, die die Parameter erfüllen, zur Auswahl einer kundenspezifischen Route daraus basierend auf dem Verarbeiten der zuvor gespeicherten Abtastsätze.

9. Ein Computerprogrammprodukt, das konfiguriert ist zum Bestimmen einer oder mehrerer Routenmetrik(en) für eine mobile Vorrichtung, die konfiguriert ist, eine Bestimmung ihrer Position zuzulassen, wobei das Computerprogrammprodukt Code aufweist, der bei einem Laden in einen Speicher und Ausführen auf einem assoziierten Prozessor ausgebildet ist zum Durchführen:
Bestimmen, ob ein Referenzstimulus ausgelöst wird;
wobei der Referenzstimulus durch die letzte Betätigung einer Start-Referenzstimulus-Option durch eine Vielzahl von kommunikativ verbundenen mobilen Vorrichtungen ausgelöst wird;
Erlangen und Speichern in Echtzeit eines Routendatensatzes, der eine Vielzahl von Abtastsätzen aufweist, wobei die Abtastsätze gleichzeitige Zeit- und Positionsdaten der mobilen Vorrichtung aufweisen, die einer Route folgt nach der Betätigung des Referenzstimulus; und
Verarbeiten von zuvor gespeicherten Abtastsätzen, um zumindest teilweise die eine oder mehrere Routenmetrik(en) zu bestimmen.

10. Das Computerprogrammprodukt gemäß Anspruch 8, wobei das Verarbeiten umfasst ein Vergleichen der Positionsdaten von zuvor gespeicherten Abtastsätzen, um einen oder mehrere übereinstimmende Abtastsätze zu bestimmen, wobei das Vergleichen auf einem Übereinstimmungskriterium basiert, und ein Bestimmen einer oder mehrerer Route-Timing-Metrik(en) zumindest teilweise unter Verwendung der Zeitdaten der übereinstimmenden Abtastsätze.

11. Das Computerprogrammprodukt gemäß Anspruch 9, wobei das Verarbeiten ein Interpolieren oder Extrapolieren der Positionsdaten von zuvor gespeicherten Abtastsätzen zum Bestimmen von Abtastsätzen des Routendatensatzes umfasst, wobei zumindest ein Teil der Abtastsätze ungenau ist, basierend auf einem Genauigkeitskriterium.

12. Eine mobile Vorrichtung (910), die konfiguriert ist zum Bestimmen einer oder mehrerer Routen-Metrik(en), wobei die mobile Vorrichtung aufweist:
ein Erfassungsmodul (915), das konfiguriert ist zum Bestimmen, ob ein Referenzstimulus ausgelöst wird;
wobei der Referenzstimulus durch die letzte Betätigung einer Start-Referenzstimulus-Option durch eine Vielzahl von kommunikativ verbundenen mobilen Vorrichtungen ausgelöst wird, wobei die mobile Vorrichtung konfiguriert ist zum Auslösen des Referenzstimulus basierend zumindest teilweise auf einem oder mehreren Signal(en), die an der mobilen Vorrichtung von einer kommunikativ verbundenen mobilen Vorrichtung empfangen wird/werden;
ein Positionsidentifikationsmodul (917), das konfiguriert ist zum Erlangen von Positionsdaten der mobilen Vorrichtung (910), nach dem Empfangen einer Benachrichtigung von dem Erfassungsmodul (915), dass der Referenzstimulüs ausgelöst wird; und
ein Verarbeitungsmodul (911), das betriebsfähig mit dem Erfassungsmodul (915) und dem Positionsidentifikationsmodul (917) gekoppelt ist, wobei das Verarbeitungsmodul (911) konfiguriert ist zum Erlangen von Zeitdaten gleichzeitig, wenn das Positionsidentifikationsmodul (917) die Positionsdaten erlangt, wobei die Zeit- und Positionsdaten zumindest teilweise einen Abtastsatz definieren und eine Vielzahl von Abtastsätzen einen Routendatensatz definieren, wobei das Verarbeitungsmodul (911) weiter konfiguriert ist zum Verarbeiten zuvor gespeicherter Abtastsätze, um zumindest teilweise die eine oder mehreren Routenmetrik(en) zu bestimmen.

13. Die mobile Vorrichtung gemäß Anspruch 12, wobei das Verarbeitungsmodul konfiguriert ist zum Vergleichen der Positionsdaten von zuvor gespeicherten Abtastsätzen, um einen oder mehrere übereinstimmende Abtastsätze zu bestimmen, wobei das Vergleichen auf einem Übereinstimmungskriterium basiert, und zum Bestimmen einer oder mehrerer Route-Timing-Metrik(en) zumindest teilweise unter Verwendung der Zeitdaten der übereinstimmenden Abtastsätze.

14. Die mobile Vorrichtung gemäß Anspruch 12, wobei das Verarbeitungsmodul konfiguriert ist zum Interpolieren oder Extrapolieren der Positionsdaten von zuvor gespeicherten Abtastsätzen zum Bestimmen von Abtastsätzen des Routendatensatzes, wobei zumindest ein Teil der Abtastsätze ungenau ist, basierend auf einem Genauigkeitskriterium.

15. Die mobile Vorrichtung gemäß Anspruch 12, die weiter eine Benutzerschnittstelle aufweist, die konfiguriert ist zum Signalisieren an einen Benutzer der mobilen Vorrichtung, ob die zuvor gespeicherten Abtastsätze oder die Routenmetriken ein Leistungskriterium zumindest teilweise nicht erfüllen.

## Revendications

1. Procédé (100) de détermination d'une ou plusieurs données métriques d'itinéraire (142) pour un dispositif mobile configuré pour permettre la détermination de sa position, le procédé (100) comprenant les étapes consistant à :
déterminer (110) si un stimulus de référence a été actionné ;
dans lequel ledit stimulus de référence est déclenché par le dernier actionnement d'une option de stimulus de référence de départ par une pluralité de dispositifs mobiles liés par la communication ;
obtenir (120) et enregistrer (130) en temps réel un enregistrement d'itinéraire (132) comprenant une pluralité d'ensembles d'échantillons, lesdits ensembles d'échantillons comprenant des données parallèles de temps et de position dudit dispositif parcourant un itinéraire après l'actionnement dudit stimulus de référence ; et
traiter (140) des ensembles d'échantillons enregistrés préalablement (136) pour déterminer au moins partiellement lesdites une ou plusieurs données métriques d'itinéraire (142).

2. Procédé selon la revendication 1, dans lequel ladite étape de traitement (140) est exécutée en temps réel.

3. Procédé selon la revendication 1, dans lequel les ensembles d'échantillons enregistrés préalablement comprennent des ensembles d'échantillons enregistrés préalablement pour différents enregistrements d'itinéraires.

4. Procédé selon la revendication 1, dans lequel ladite étape de traitement (140) comprend les étapes consistant à comparer les données de position d'ensembles d'échantillons enregistrés préalablement (136) afin de déterminer un ou plusieurs ensembles d'échantillons alignés, ladite comparaison étant fondée sur un critère d'alignement, et à déterminer une ou plusieurs données métriques de chronométrage d'itinéraires en utilisant au moins partiellement les données de temps desdits ensembles d'échantillons alignés.

5. Procédé selon la revendication 4, dans lequel un ensemble d'échantillons est retenu comme ensemble d'échantillons aligné si une comparaison de ses données de position satisfait un critère d'alignement avec les données de position d'un ensemble d'échantillons de référence de recouvrement obtenu lors de l'actionnement d'un stimulus de référence de recouvrement et les données de temps dudit ensemble d'échantillons aligné et dudit ensemble d'échantillons de référence de recouvrement sont utilisées pour déterminer un temps de recouvrement.

6. Procédé selon la revendication 1, dans lequel ladite étape de traitement (140) comprend l'étape consistant à interpoler ou extrapoler les données de position d'ensembles d'échantillons enregistrés préalablement (136) afin de déterminer des ensembles d'échantillons dudit enregistrement d'itinéraire (132), dans lequel au moins une partie desdits ensembles d'échantillons est imprécise, en fonction d'un critère de précision.

7. Procédé selon la revendication 1, dans lequel au moins une partie dudit enregistrement d'itinéraire est fondée sur une saisie de l'utilisateur.

8. Procédé selon la revendication 1, comprenant en outre les étapes consistant à :
obtenir un ou plusieurs paramètres d'un itinéraire personnalisé ;
obtenir des informations sur une région incluant un point de référence défini par les données de position dudit dispositif mobile lors de l'actionnement dudit stimulus de référence ou proche de celui-ci ; et
à l'aide au moins partiellement desdites informations sur ladite région et desdits paramètres, déterminer si certains desdits un ou plusieurs itinéraires dans ladite région répondent auxdits paramètres, afin de sélectionner à partir de là un itinéraire personnalisé, en fonction dudit traitement des ensembles d'échantillons enregistrés préalablement.

9. Progiciel d'ordinateur configuré pour déterminer une ou plusieurs données métriques d'itinéraire pour un dispositif mobile configuré pour permettre la détermination de sa position, le progiciel d'ordinateur comprenant du code qui, lorsqu'il est chargé dans une mémoire et exécuté par un processeur associé, est conçu pour exécuter les étapes consistant à :
déterminer si un stimulus de référence a été actionné ;
dans lequel ledit stimulus de référence est déclenché par le dernier actionnement d'une option de stimulus de référence de départ par une pluralité de dispositifs mobiles liés par la communication ;
obtenir et enregistrer en temps réel un enregistrement d'itinéraire comprenant une pluralité d'ensembles d'échantillons, lesdits ensembles d'échantillons comprenant des données parallèles de temps et de position dudit dispositif parcourant un itinéraire après l'actionnement dudit stimulus de référence ; et
traiter des ensembles d'échantillons enregistrés préalablement pour déterminer au moins partiellement lesdites une ou plusieurs données métriques d'itinéraire (142).

10. Progiciel d'ordinateur selon la revendication 8, dans lequel ladite étape de traitement comprend les étapes consistant à comparer les données de position d'ensembles d'échantillons enregistrés préalablement afin de déterminer un ou plusieurs ensembles d'échantillons alignés, ladite comparaison étant fondée sur un critère d'alignement, et à déterminer une ou plusieurs données métriques de chronométrage d'itinéraires en utilisant au moins partiellement les données de temps desdits ensembles d'échantillons alignés.

11. Progiciel d'ordinateur selon la revendication 9, dans lequel ladite étape de traitement comprend l'étape consistant à interpoler ou extrapoler les données de position d'ensembles d'échantillons enregistrés préalablement afin de déterminer des ensembles d'échantillons dudit enregistrement d'itinéraire, dans lequel au moins une partie desdits ensembles d'échantillons est imprécise, en fonction d'un critère de précision.

12. Dispositif mobile (910) configuré pour déterminer une ou plusieurs données métriques d'itinéraire, ledit dispositif mobile comprenant :
un module de détection (915) configuré pour déterminer si un stimulus de référence a été actionné ;
dans lequel ledit stimulus de référence est déclenché par le dernier actionnement d'une option de stimulus de référence de départ par une pluralité de dispositifs mobiles liés par la communication ;
dans lequel le dispositif mobile est configuré pour déclencher le stimulus de référence en fonction, au moins partiellement, d'un ou plusieurs signaux reçus par ledit dispositif mobile en provenance d'un dispositif mobile lié par la communication ;
un module d'identification de position (917) configuré pour obtenir des données de position dudit dispositif mobile (910), après avoir reçu un avis dudit module de détection (915) indiquant que le stimulus de référence a été actionné ; et
un module de traitement (911) couplé en service au module de détection (915) et au module d'identification de position (917), ledit module de traitement (911) étant configuré pour obtenir des données de temps de manière synchronisée avec l'obtention des données de position par le module d'identification de position (917), lesdites données de temps et de position définissant au moins partiellement un ensemble d'échantillons et une pluralité d'ensembles d'échantillons qui définissent un enregistrement d'itinéraire, ledit module de traitement (911) étant en outre configuré pour traiter des ensembles d'échantillons enregistrés préalablement pour déterminer au moins partiellement lesdites une ou plusieurs données métriques d'itinéraire.

13. Dispositif mobile selon la revendication 12, dans lequel le module de traitement est configuré pour comparer les données de position d'ensembles d'échantillons enregistrés préalablement afin de déterminer un ou plusieurs ensembles d'échantillons alignés, ladite comparaison étant fondée sur un critère d'alignement, et pour déterminer une ou plusieurs données métriques de chronométrage d'itinéraires en utilisant au moins partiellement les données de temps desdits ensembles d'échantillons alignés.

14. Dispositif mobile selon la revendication 12, dans lequel le module de traitement est configuré pour interpoler ou extrapoler les données de position d'ensembles d'échantillons enregistrés préalablement afin de déterminer des ensembles d'échantillons dudit enregistrement d'itinéraire, dans lequel au moins une partie desdits ensembles d'échantillons est imprécise, en fonction d'un critère de précision.

15. Dispositif mobile selon la revendication 12, comprenant en outre une interface d'utilisateur configurée pour signaler à un utilisateur du dispositif mobile que lesdits ensembles d'échantillons enregistrés préalablement ou lesdites données métriques ne correspondent pas au moins partiellement à un critère de performances.
